## Europäisches Patentamt
## European Patent Office
## Office européen des brevets

(19)

(11) Numéro de publication: **0 002 302**
**B1**

(12)

# FASCICULE DE BREVET EUROPEEN

(45) Date de publication du fascicule du brevet: **23.11.83**

(51) Int. Cl.³: **B 29 C 17/07**

(21) Numéro de dépôt: **78200324.8**

(22) Date de dépôt: **30.11.78**

(54) **Procédé pour la production de corps creux à partir de préformes en matière thermoplastique.**

(30) Priorité: **05.12.77 FR 7736798**

(43) Date de publication de la demande:
**13.06.79 Bulletin 79/12**

(45) Mention de la délivrance du brevet:
**23.11.83 Bulletin 83/47**

(84) Etats contractants désignés:
**BE CH DE FR GB LU NL SE**

(56) Documents cités:
**DE - A - 1 461 849**
**DE - A - 1 479 200**
**DE - A - 2 729 093**
**DE - B - 1 259 090**
**FR - A - 2 080 622**
**FR - A - 2 119 922**
**FR - A - 2 150 344**
**US - A - 3 048 889**
**US - A - 3 717 429**

(73) Titulaire: **SOLVAY & Cie (Société Anonyme)**
**Rue du Prince Albert, 33**
**B-1050 Bruxelles (BE)**

(72) Inventeur: **Hubert, Guy**
**Chaussée de Rixensart, 18**
**B-1338 Lasne-Chapelle-Saint-Lambert (BE)**
Inventeur: **Ghyselinck, Philippe**
**Avenue des Tarins, 17**
**B-1420 Braine-l'Alleud (BE)**

Courier Press, Leamington Spa, England.

Procédé pour la production de corps creux
à partir de préformes en matière thermoplastique

La présente invention concerne un procédé pour la production de corps creux à partir de préformes en matière thermoplastique dont une extrémité ouverte comporte un col moulé au moins partiellement dans sa forme définitive.

On connaît de nombreux procédés de production de corps creux en matière thermoplastique comprenant deux étapes, à savoir la réalisation d'une préforme à partir de la matière thermoplastique utilisée et le moulage final de cette préforme, par exemple par soufflage, pour obtenir le corps creux final désiré.

Ces procédés sont couramment utilisés pour la production de corps creux par la technique dite d'injection-soufflage dans laquelle la préforme intermédiaire est réalisée par moulage par injection.

Ces procédés sont également d'application pour la production de corps creux orientés moléculairement dans lesquels il est souvent necessaire de réaliser des préformes qui doivent subir un traitement thermique bien défini afin d'induire des tensions d'orientation dans leur paroi lors du moulage final subséquent. De telles préformes peuvent être réalisées par différentes techniques et notamment par moulage par injection ou par moulage par soufflage.

Il est souhaitable de pourvoir les préformes d'une col ouvert dont au moins une partie est moulée dans sa forme définitive, car la matière thermoplastique se trouve à une température idéale lors de la formation des préformes pour permettre un moulage précis de détails tels que des filetages, des bagues d'orifice, etc. qui conditionnent souvent la qualité des corps creux finalement obtenus. En effet, lors de la production de corps creux orientés, les préformes ne se trouvent généralement plus, après conditionnement thermique, à une température permettant, lots du soufflage final, le moulage précis de tels détails. Il en va souvent de même lors de la production de corps creux non orientés par la technique d'injection-soufflage car la matière thermoplastique est refroidie durant le moulage par injection de la préforme et durant le transfert de celle-ci vers le moule de soufflage final.

En conséquence, il est fréquent qu'il faille souffler des préformes présentant une bague d'orifice moulée dans sa forme définitive ou d'autres détails tels que des filetages voire des préformes dont le col est moulé entièrement dans sa forme définitive. Ces préformes sont, après un traitement thermique éventuel, enfermées dans un moule de soufflage final et mises en forme définitive par soufflage au moyen d'un fluide d'expansion qui est introduit dans les préformes par une tuyère de soufflage pénétrant à l'intérieur des préformes par leur extrémité ouverte. Ce moulagé par soufflage final peut, en outre, être précédé d'un étirage longitudinal des préformes, par exemple par l'intermédiaire d'un piston interne d'étirage coulissant dans la tuyère de soufflage, lors de la réalisation de corps creaux orientés.

Dans tous les cas, la paroi des préformes subit un étirage longitudinal lors du soufflage final et quels que soient les moyens mis jusqu'à présent en oeuvre, on constate que cet étirage entraîne une déformation de la partie du col déjà moulée de la préforme. De ce fait, une partie de l'avantage obtenu en moulant cette partie lors de la fabrication de la préforme, et qui consiste en une plus grande précision, se trouve perdue.

Par ailleurs, dans le brevet US—A—3717429, on décrit un procédé pour la production de corps creux par soufflage au moyen d'une tuyère de soufflage, dans lequel on prévoit de refroidir la tuyère de soufflage et une partie située au-delà du col du corps creux moulé durant l'opération de soufflage. Toutefois, ce procédé ne concerne pas la réalisation de corps creux au départ de préformes moulées préalablement et présentant un col dont au moins une partie est moulée dans sa forme définitive. La réfrigération en cours de soufflage que y est prévue n'a pour but que de réfrigérer le déchet de col du corps creux moulé en vue de faciliter son élimination ultérieure et elle ne pourrait être exploitée pour empêcher une déformation du col du corps creaux durant le soufflage dès lors que ce col est précisément moulé par déformation au cours du soufflage.

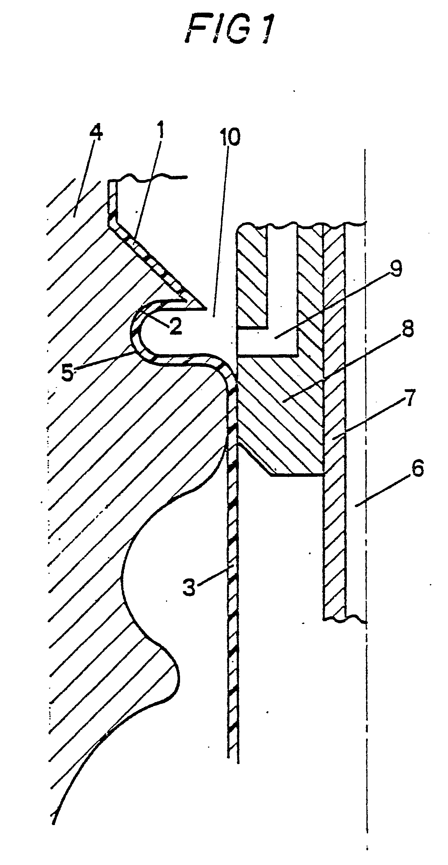

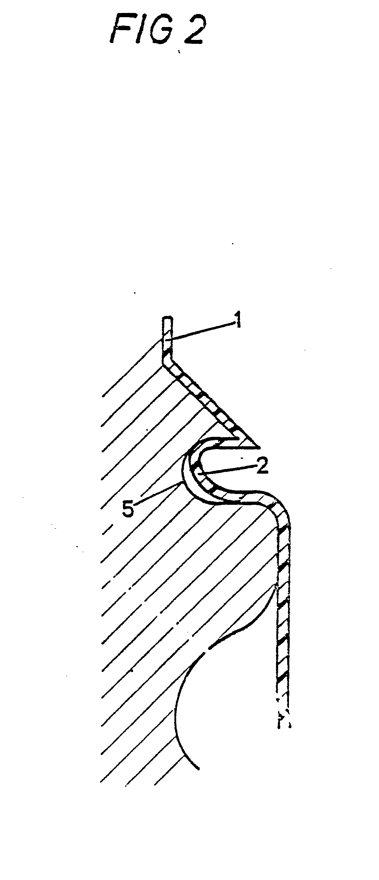

Dans le brevet US—A—3048883, on divulgue un procédé pour le moulage direct de corps creux au départ d'une paraison tubulaire extrudée. Selon le premier mode de réalisation illustré par les figures 1 et 2, une portion de la paraison est saisie dans sa partie supérieure entre des mâchoires refroidies qui assurent la mise en forme du col du corps creaux à produire et le transfert de la portion de paraison pendante dans un moule de corps où celle-ci est mise en forme par soufflage. Une réfrigération par les mâchoires est prévue et peut vraisemblablement contribuer à réduire la déformation subie par le col moulé lors de l'étirage produit par le soufflage de la paraison mais elle ne peut supprimer complètement tout risque de déformation du fait que le col n'est pas maintenu par l'intérieur au cours du soufflage. Selon le deuxième mode de réalisation illustré par les figures 3 et 4, les mâchoires refroidies, que assurent la mise en forme du col et le transfert de la portion de paraison, coopèrent à cet effet avec la tuyère utilisée pour le soufflage final. Il va de soi que le procédé divulgué dans le brevet US—A—3048883 n'est pas applicable à la production de corps creux en deux étapes où une préforme est moulée au cours de la première étape par soufflage ou par injection.

La demanderesse a maintenant trouvé un procédé qui permet le soufflage final de préformes pourvues d'un col ouvert dont au moins une partie est moulée dans sa forme définitive en évitant la déformation de la partie du col de la préforme déjà moulée.

La présente invention concerne dès lors un procédé pour la production de corps creux en deux étapes à partir de préformes en matière thermoplastique moulée dans la première étape, dont une extrémité ouverte comporte un col dont au moins une partie est moulée dans sa forme définitive dans la première étape, dans un moule de préforme, procédé, dans lequel le moulage de la deuxième étape est réalisé par soufflage au moyen d'un fluide d'expansion introduit dans les préformes insérées dans les moules de la deuxième étape, par une tuyère de soufflage pénétrant dans l'intérieur des préformes par leur extrémité ouverte et dans lequel, lors de l'introduction de la tuyère de soufflage, on isole la région moulée du col des préformes de la partie des préformes soumise à l'expansion lors du soufflage, selon lequel on utilise des préformes réalisées par moulage par injection ou par moulage par soufflage et on procède à une réfrigération par balayage avant soufflage final au moyen d'un fluide réfrigérant introduit dans l'espace compris entre la tuyère de soufflage et la paroi interne de la région isolée.

Le procédé suivant l'invention peut être avantageusement exploité dans toutes les techniques de production de corps creux à partir de préformes comportant un col dont au moins une partie est moulée dans sa forme définitive et notamment dans les techniques de moulage par soufflage de corps creux orientés faisant appel à de telles préformes, même lorsque ces dernières techniques comportent en plus une étape d'étirage longitudinal des préformes avant ou durant leur soufflage final.

Les préformes utilisables pour la réalisation du procédé suivant l'invention sont réalisées par moulage par injection ou par moulage par soufflage. Le col des préformes est moulé au moins en partie dans sa forme définitive lors de la production des préformes.

L'isolement entre la région comprise entre la tuyère et la partie moulée du col des préformes et le reste de l'intérieur des préformes lors de l'introduction de la tuyère de soufflage peut être obtenu par tout moyen permettant de réaliser l'étanchéité entre la tuyère au-dessus de l'orifice de soufflage de cette dernière et en-dessous de la partie moulée du col des préformes. Suivant un mode de réalisation préférentiel, la tuyère de soufflage peut avantageusement être équipée d'une bague périphérique de calibrage interne qui agit directement en-dessous de la partie moulée du col des préformes et qui comprime la matière thermoplastique à ce niveau contre la paroi de l'empreinte du moule lors de l'introduction de la tuyère de soufflage dans les préformes. La bague de calibrage permet dans ce cas de réglier le diamètre d'ouverture du col du corps creux final tout en assurant l'étanchéité parfaite entre la région moulée du col des préformes et le reste des préformes c'est-à-dire la partie des préformes soumise à l'expansion lors du soufflage final.

Le fluide réfrigérant assurant par balayage la réfrigération interne de la région moulée du col des préformes peut être quelconque pour autant qu'il soit inerte vis-à-vis de la matière thermoplastique constituant les préformes et qu'il se trouve à une température inférieure, de préférence de plus de 50°C, à celle de la partie moulée du col des préformes lors de l'introduction de la tuyère. On peut notamment utiliser à cet effet des liquides tels que de l'eau ou, de préférence, des gaz froids tels que par exemple de l'azote obtenu par détente d'azote liquéfié.

Le fluide réfrigérant est introduit par la tuyère de soufflage en regard de la partie moulée du col des préformes. Afin d'optimiser la réfrigération de ces parties, il est souhaitable de rendre le balayage aussi efficace que possible en s'assurant par exemple que le fluide introduit puisse s'échapper librement, par exemple par une ouverture annulaire délimitée par l'extrémité ouverte des préformes et par la tuyère de soufflage, et en réglant le débit du fluide réfrigérant de façon à permettre une grande extraction de calories. La réfrigération par balayage peut être assurée dès l'introduction de la tuyère de soufflage dans les préformes et en tout cas, avant le début de l'introduction du fluide de soufflage. La réfrigération peut si on le souhaite être poursuivie durant le soufflage final mais peut aussi être interrompue dès le début de l'opération de soufflage final.

La durée de la réfrigération par balayage peut varier dans de larges limites. En général, le balayage est poursuivi pendant au moins une seconde. En outre, le décalage dans le temps entre le balayage et le soufflage est en général d'au moins une seconde.

Le choix des conditions opératoires de la réfrigération par balayage ne présente en fait aucune difficulté et peut se faire facilement par voie expérimentale, les conditions étant rendues progressivement plus sévères jusqu'à ce que la partie des corps creux obtenus finalement correspondant à la partie moulée du col des préformes présente un aspect satisfaisant.

Suivant un mode de réalisation préféré du procédé suivant l'invention, le fluide réfrigérant mis en oeuvre est le fluide d'expansion utilisé pour assurer le moulage final des préformes. Dans ce cas, le canal prévu au centre de la tuyère de soufflage pour assurer l'introduction de ce fluide dans les préformes à mouler comporte des dérivations pour diriger une partie de ce fluide d'expansion vers la région à réfrigérer par balayage. Des moyens, tels que, par exemple, des vannes électromagnétiques, sont prévus pour canaliser le fluide d'expansion uniquement vers ces dérivations lors de l'introduction de la tuyère de soufflage dans les préformes puis soit à la fois vers les dérivations et vers l'orifice de soufflage par où le fluide d'expansion pénètre dans les préformes, soit seulement vers cet orifice. En général, il est plus avantageux de préférer la dernière possibilité afin d'éviter des pertes de charges gênantes du fluide d'expansion lors du soufflage final.

Le fluide réfrigérant est introduit de manière à réfrigérer la région isolée et plus particulièrement la paroi interne de la partie moulée du col des préformes. L'introduction de fluide réfrigérant peut être réalisée notamment par des fentes annulaires judicieusement prévues sur le pourtour de la tuyère de soufflage ou par des orifices radiaux disposés en couronnes sur la périphérie de la tuyère de soufflage.

Le procédé suivant l'invention est, par ailleurs, explicité plus en détail dans la description qui va suivre d'une variante de réalisation pratique qui est donnée à titre purement illustratif.

Dans cette description, on se référera à la fig. 1 des dessins annexés qui montre en demi-coupe partielle un ensemble constitué d'un moule de soufflage final et d'une tuyère de soufflage adaptée pour la réalisation du procédé suivant l'invention.

Ainsi qu'il apparaît à cette figure, la préforme mise en oeuvre, et qui a été préalablement produite par exemple par moulage par soufflage, comporte un faux goulot ouvert 1, une bague d'orifice de col 2 moulée dans sa forme définitive et un corps cylindrique 3 qui est de préférence fermé à son extrémité inférieure.

La préforme est insérée dans le moule de soufflage final 4 dont l'impreinte comporte une cavité 5 permettant le logement précis de la bague d'orifice de col 2 de la préforme.

La tuyère de soufflage comporte un conduit central 6 pour l'introduction du fluide d'expansion dans la préforme, un piston 7 d'étirage longitudinal de la préforme, une bague de calibrage 8 et des conduits radiaux 9 pour diriger le fluide réfrigérant.

Lors de l'introduction de la tuyère de soufflage dans la préforme, la bague de calibrage 8 vient s'appliquer contre la paroi interne de la préforme et isole de ce fait la région délimitée par la partie moulée 1, 2 de la préforme du reste de l'intérieur correspondant à la partie 3 de la préforme. En outre, les canaux radiaux 9 sont dirigés vers la paroi interne de la bague d'orifice de col 2 de la préforme.

Dès que la tuyère est introduite dans la préforme et avant de procéder au moulage final, des moyens, non représentés, canalisent un fluide réfrigérant qui peut, ainsi qu'il a été dit, être le fluide d'expansion lui-même, dans les conduits radiaux 9 et ce fluide assure par balayage une réfrigération intense de la région isolée. Le fluide de réfrigération injecté par les conduits radiaux 9 peut s'échapper librement par l'ouverture annulaire 10 délimitée par l'extrémité ouverte de la préforme et par la tuyère de soufflage.

Après un certain laps de temps, qui peut être déterminé dans chaque cas pratique par des essais d'orientation, la séquence de moulage final par étirage de la préforme au moyen du piston d'étirage 7 et par soufflage au moyen du fluide d'expansion introduit par le canal 6 est démarrée, la réfrigération par balayage de la bague d'orifice de col 2 étant au choix maintenue ou supprimée durant cette dernière séquence.

En exploitant le procédé qui vient d'être décrit, il a été possible à partir de préformes du type illustré par la fig. 1 de réaliser des corps creux orientés dont la bague d'orifice de col 2 ne présente aucune altération après soufflage final. Par contre, en supprimant l'opération de réfrigération, on a constaté que la majorité des corps creux orientés obtenus présentaient une bague d'orifice de col comportant une déformation du type illustré par la fig. 2 des dessins annexés.

Les corps creux obtenus par le procédé suivant l'invention peuvent être utilisés à de nombreux usages et notamment au conditionnement de liquides.

**Revendications**

1. Procédé pour la production de corps creux en deux étapes à partir de préformes en matière thermoplastique moulées dans la première étape, dont une extrémité ouverte (1) comporte un col (2) dont au moins une partie est moulée dans sa forme définitive dans la première étape, dans un moule de préforme, procédé, dans lequel le moulage de la deuxième étape est réalisé par soufflage au moyen d'un fluide d'expansion introduit dans les préformes insérées dans les moules de la deuxième étape par une tuyère de soufflage (6, 7, 8) pénétrant dans l'intérieur des préformes par leur extrémité ouverte (1) et dans lequel, lors de l'introduction de la tuyère de soufflage (6, 7, 8), on isole la région moulée du col des préformes (1, 2) de la partie des préformes soumise à l'expansion lors du soufflage, caractérisé en ce que l'on utilise des préformes réalisées par moulage par injection ou par moulage par soufflage et que l'on procède à une refrigération par balayage avant soufflage final au moyen d'un fluide réfrigérant introduit dans l'espace compris entre la tuyère de soufflage (6, 7, 8) et la paroi interne de la région isolée.

2. Procédé suivant la revendication 1, caractérisé en ce qu'on équipe la tuyère de soufflage d'une bague périphérique (8) de calibrage interne qui agit directement en-dessous de la région moulée (1, 2) du col des préformes et qui comprime la matière thermoplastique à ce niveau contre la paroi de l'impreinte du moule (4) lors de l'introduction de la tuyère de soufflage (6, 7, 8) dans les préformes.

3. Procédé suivant l'une quelconque des revendications 1 à 2, caractérisé en ce que l'on utilise comme fluide réfrigérant le même que le fluide d'expansion utilisé pour assurer le soufflage final des corps creux.

4. Procédé suivant l'une quelconque des revendications 1 à 3, caractérisé en ce que l'on introduit le fluide réfrigérant par l'intermédiaire de la tuyère de soufflage dans la région isolée et on l'évacue par une ouverture annulaire (10) délimitée par l'extrémité ouverte (1) des préformes et par la tuyère de soufflage (6, 7, 8).

5. Procédé suivant l'une quelconque des revendications 1 à 4, caractérisé en ce que l'on opère la réfrigération de la région isolée (1, 2) au moins 1 seconde avant le soufflage final des corps creux.

6. Procédé suivant l'une quelconque des revendications 1 à 5, caractérisé en ce que l'on poursuit la réfrigération durant l'opération de soufflage final des corps creux.

7. Procédé suivant l'une quelconque des revendications 1 à 5, caractérisé en ce que l'on interrompt la réfrigération dès le début de l'opération de soufflage final des corps creux.

8. Procédé suivant l'une quelconque des revendications 1 à 7, caractérisé en ce que l'on poursuit la réfrigération pendant au moins une seconde.

**Patentansprüche**

1. Verfahren zur Herstellung von Hohlkörpern in zwei Stufen aufgehend von in der ersten Stufe aus thermoplastischem Material geformten Vorformlingen, deren eines offenes Ende (1) einen Hals (2) aufweist, von dem mindestens ein Teil in seiner endgültigen Form in der ersten Stufe in einer Vorformlingsform geformt ist, bei welchem Verfahren die Formgebung der zweiten Stufe durch Aufblasen mittels eines Expansionsfluids bewirkt wird, das in die in die Formen der zweiten Stufe eingesetzten Vorformlinge mittels einer Blaseinrichtung (6, 7, 8) eingeführt wird, die in das Innere der Vorformlinge durch deren offenes Ende (1) eindringt, und bei welchem Verfahren während der Einführung der Blaseinrichtung (6, 7, 8) der geformte Bereich des Halses der Vorformlinge (1, 2) gegenüber dem Teil der Vorformlinge, der während des Aufblasens der Expansion ausgesetzt ist, isoliert wird, dadurch gekennzeichnet, dass im Wege des Einspritzformens oder des Blasformens hergestellte Vorformlinge verwendet werden und dass eine Kühlung durch Spülen vor dem endgültigen Aufblasen mittels eines Kühlfluids ausgeführt wird, das in den Raum zwischen der Blaseinrichtung (6, 7, 8) und der Innenwand des isolierten Bereichs eingeführt wird.

2. Verfahren nach Anspruch 1, dadurch gekennzeichnet, dass die Blaseinrichtung mit einem umlaufenden Ring (8) mit Innenkalibrierung ausgestattet wird, der direkt unterhalb des geformten Bereichs (1, 2) des Halses der Vorformlinge einwirkt und der das thermoplastische Material in diesem Niveau gegen die Wand der Vertiefung der Form (4) während der Einführung der Blaseinrichtung (6, 7, 8) in die Vorformlinge zusammendrückt.

3. Verfahren nach einem der Ansprüche 1 bis 2, dadurch gekennzeichnet, dass für das Kühlfluid dasselbe Fluid wie für das Expansionsfluid verwendet wird, das seinerseits zur Gewährleistung der endgültigen Aufblasung der Hohlkörper verwendet wird.

4. Verfahren nach einem der Ansprüche 1 bis 3, dadurch gekennzeichnet, dass das Kühlfluid unter Zuhilfenahme der Blaseinrichtung in den isolierten Bereich eingeführt wird und durch eine ringförmige Öffnung (10) abgeführt wird, die durch das offene Ende (1) der Vorformlinge und die Blaseinrichtung (6, 7, 8) begrenzt ist.

5. Verfahren nach einem der Ansprüche 1 bis 4, dadurch gekennzeichnet, dass die Kühlung des isolierten Bereichs (1, 2) mindestens eine Sekunde vor der endfühltigen Aufblasung der Hohlkörper ausgeführt wird.

6. Verfahren nach einem der Ansprüche 1 bis 5, dadurch gekennzeichnet, dass die Kühlung während der Operation des endgültigen Aufblasens der Hohlkörper fortgesetzt wird.

7. Verfahren nach einem der Ansprüche 1 bis 5, dadurch gekennzeichnet, dass die Kühlung im Augenblick des Beginns der Operation des endgültigen Aufblasens der Hohlkörper unterbrochen wird.

8. Verfahren nach einem der Ansprüche 1 bis 7, dadurch gekennzeichnet, dass die Kühlung während mindestens einer Sekunde fortgesetzt wird.

**Claims**

1. Process for the production of hollow bodies in two steps starting from thermoplastic preforms moulded in the first step, of which an open end (1) possesses a neck (2), at least part of which is moulded into its definitive shape in the first step, in a preform mould, in which process the moulding of the second step is carried out by blowing by means of a blowing fluid introduced into the preforms, inserted in the moulds of the second step, through a blow nozzle (6, 7, 8) penetrating inside the preforms through their open end (1), and in which process, during the introduction of the blow nozzle (6, 7, 8), the moulded region of the neck of the preforms (1, 2) is isolated from the part of the preforms subjected to blowing during the blowing operation, characterised in that the preforms used are produced by injection moulding or by blow moulding, and in that, before the final blowing operation, cooling is carried out by sweeping with a cooling fluid introduced into the space between the blow nozzle (6, 7, 8) and the inner wall of the isolated region.

2. Process according to Claim 1, characterised in that the blow nozzle is equipped with a peripheral ring (8) for internal calibration, which acts directly below the moulded region (1, 2) of the neck of the preforms, and which compresses the thermoplastic at this point against the wall of the cavity of the mould (4) during the introduction of the blow nozzle (6, 7, 8) into the preforms.

3. Process according to either one of Claims 1 and 2, characterised in that the cooling fluid used is the same as the blowing fluid used to ensure the final blowing of the hollow bodies.

4. Process according to any one of Claims 1 to 3, characterised in that the cooling fluid is introduced via the blow nozzle into the isolated region, and is discharged through an annular orifice (10) delimited by the open end (1) of the preforms and by the blow nozzle (6, 7, 8).

5. Process according to any one of Claims 1 to 4, characterised in that the cooling of the isolated region (1, 2) is carried out at least 1 second before the final blowing of the hollow bodies.

6. Process according to any one of Claims 1 to 5, characterised in that the cooling is continued during the operation of final blowing of the hollow bodies.

7. Process according to any one of Claims 1 to 5, characterised in that the cooling is interrupted as soon as the operation of final blowing of the hollow bodies has started.

8. Process according to any one of Claims 1 to 7, characterised in that the cooling is continued for at least one second.

# FIG 1

# FIG 2